# EUROPÄISCHE PATENTSCHRIFT

(11) **EP 0 442 048 B1**
(45) Veröffentlichungstag und Bekanntmachung des Hinweises auf die Patenterteilung: **23.03.1994**
(21) Anmeldenummer: 90121944.4
(22) Anmeldetag: 16.11.1990
(51) Int. Cl.: F16D 65/02

(54) **Bremsklotz**
Brake pad
Plaquette de frein

(30) Priorität: 01.02.1990 DE 4002863
(43) Veröffentlichungstag der Anmeldung: 21.08.1991
(73) Patentinhaber: ITT Automotive Europe GmbH, 60488 Frankfurt (DE)
(72) Erfinder: Schiel, Wolfgang, W-6230 Frankfurt/Main 80 (DE); Bretzler, Rainer, W-6233 Kelkheim (DE); Rehm, Joachim, W-6000 Frankfurt/Main 80 (DE)

(56) Entgegenhaltungen:
- EP-A- 0 341 610
- DE-A- 1 575 810
- DE-C- 2 230 574
- GB-A- 2 071 240
- US-A- 3 767 018

## Beschreibung

Die Erfindung betrifft einen Bremsklotz gemäß dem Oberbegriff des Patentanspruchs 1.

Ein gattungsgemäßer Bremsklotz ist aus der EP-A-0 341 610 bekannt. Dieser bekannte Bremsklotz weist zwei von Belagmasse freie, im Profil hammerkopfförmige Seitenbereiche seiner Belagträgerplatte auf, die in Umfangsrichtung vom Bremsklotz abstehen und an ihren Schmalseiten sowohl dem Bremsklotz zugewandte als auch abgewandte Anlageflächen aufweisen, welche zur Abstützung der Umfangskräfte vorgesehen sind. Die Umfangskräfte werden zumindest bei großen Bremsanlegekräften über beide Seitenbereiche auf die Bremse übertragen. Bei zunehmendem Belagverschleiß verschieben sich die Trägerplatten der Bremsklötze in Richtung auf die Bremsscheibe zu. Im Extremfall, bei nahezu vollständig verschlissenen Reibbelägen kann daher bei den bekannten Bremsklötzen die Führung der Seitenbereiche der Trägerplatten in der Bremse beeinträchtigt sein.

Aus der GB-OS 2,108,606 ist ein Bremsklotz bekannt, bei dem immer nur symmetrisch zu einer Mittellinie L (siehe genannte Literaturstelle Fig. 16) liegende, von Belagmasse freie Teilbereiche der seitlichen Abstützfläche gegenüber dem restlichen Teil der Trägerplatte parallel versetzt sind, um auch bei abgeschliffenen Bremsbelägen eine sichere seitliche Führung zu erreichen.

Nachteilig bei dieser Ausgestaltung ist es, daß hierdurch bei abgeschliffenen Belägen sich die seitliche Abstützfläche erheblich vermindern kann, was zu einer größeren Flächenbelastung und damit einer möglichen Verletzung der Auflagefläche führen kann.

Die Erfindung geht aus von einem Bremsklotz der aus dem Hauptanspruch ersichtlichen Gattung und hat sich zur Aufgabe gestellt, die Abstützung des Bremsklotzes bei abgeschliffenen Belägen zu verbessern.

Die Aufgabe wird beim Bremsklotz der eingangs genannten Gattung durch die sich aus dem kennzeichnenden Teil des Hauptanspruchs ergebene Merkmalskombination gelöst. Die Erfindung besteht im Prinzip also darin, den gesamten als Auflagefläche dienenden Seitenbereich des Bremsklotzes bzw. beide Seitenbereiche, soweit beide Seiten als Auflageflächen dienen, über die gesamte Auflageflächen abzukröpfen und damit parallel nach hinten zu versetzen.

Eine besonders einfache Ausgestaltung der Erfindung ergibt sich, wenn die der Auflage dienenden Seitenbereiche durch die aus Anspruch 2 vorgegebene Merkmalskombination bestimmt sind. Dabei ist es nicht notwendig, daß die Beläge nur auf Zug belastet sind. Sie können auch ein- oder beidseitig auf Zug und/oder Druck beaufschlagt sein.

Ein Ausführungsbeispiel der Erfindung wird nachfolgend anhand der Zeichnung erläutert.

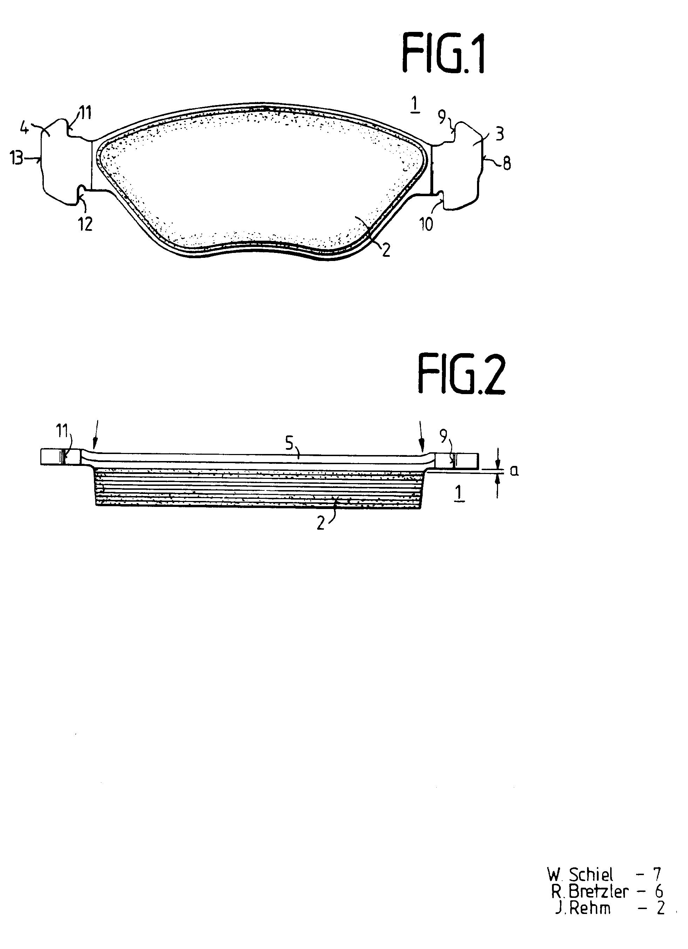

Darin zeigt
- Fig. 1: die Vorderansicht eines erfindungsgemäßen Bremsklotzes und
- Fig. 2: die Draufsicht auf einen Bremsklotz nach Fig. 1.

Der Bremsklotz 1 besitzt eine Trägerplatte 5, auf der ein Belag 2 aufgebracht ist. An den beiden Seiten der Trägerplatte 5 geht diese in zwei hammerförmige Ansätze 3,4 über, die zum Abstützen des Bremsklotzes an einem bzw. zwei Trägerarmen dienen. Dabei können die Kanten 8,9,10 auf der rechten Seite bzw. 11,12,13 auf der linken Seite der Trägerplatte als auf Zug bzw. auf Druck beaufschlagte Seitenflächen dienen. Wichtig ist aber, daß alle Kanten in einer Ebene liegen, da die gesamten Seitenbereiche 3 bzw. 4 parallel zu dem restlichen Teil der Trägerplatte 5 um einen Betrag a versetzt sind, so daß auch bei abgeschliffenen Belägen immer die gesamte zur Abstützung dienende Fläche zur Verfügung steht.

## Patentansprüche

1. Bremsklotz für Scheibenbremsen, mit einer Trägerplatte (5) und einem auf der Trägerplatte (5) befestigten Reibbelag (2), mit zwei von Belagmasse freien Seitenbereichen (3,4) der Trägerplatte (5), die an ihren Schmalseiten sowohl dem Bremsklotz zugewandte als auch abgewandte Anlageflächen (9,10,11,12) bzw. (8,13) aufweisen, welche zur Abstützung des Bremsklotzes in der Scheibenbremse bestimmt sind und mit dieser derart zusammenwirken, daß zumindest bei großen Bremsanlegekräften die am Bremsklotz auftretende Umfangskraft über beide Seitenbereiche (3,4) auf die Scheibenbremse übertragen werden, dadurch **gekennzeichnet**, daß der gesamte zur Abstützung des Bremsklotzes dienende Seitenbereich (3,4) gegenüber dem Restteil der Trägerplatte (5) in von der Reibfläche sich entfernender Richtung parallel versetzt ist.

2. Bremsklotz nach Anspruch 1, dadurch **gekennzeichnet,** daß die versetzten Seitenbereiche durch zwei im wesentlichen haken-, insbesondere hammerförmige Ansätze gebildet sind.

## Claims

1. A brake shoe for disc brakes, comprising a carrier plate (5) and a friction lining (2) secured to the carrier plate (5), with two lateral areas (3, 4) of the carrier plate (5) on which no lining material is applied and which, at their narrow sides, have abutment surfaces (9, 10, 11, 12) or (8, 13), respectively, which show to the brake shoe and are averted therefrom and which are intended to support the brake shoe in the disc brake and cooperate with said in such a manner that at least in the presence of great brake application forces the circumferential force occurring at the brake shoe is transmitted via both lateral areas (3, 4) onto the disc brake,
**characterised** in that the entire lateral area (3, 4) serving to support the brake shoe is offset in parallel in relation to the remaining part of the carrier plate (5) in the direction moving away from the friction surface.

2. A brake shoe as claimed in claim 1,
**characterised** in that the offset lateral areas are formed by two attachments which substantially are of hook-shaped, in particular hammer-shaped configuration.

## Revendications

1. Plaquette de frein pour frein à disque, comprenant une plaque de support (5) et une garniture de friction( 2) fixée sur la plaque de support (5), la plaque de support (5) comportant deux parties latérales (3, 4) qui sont exemptes de la masse de garniture et qui, sur leurs petits côtés, comportent des surfaces d'appui (respectivement 9, 10, 11, 12 et 8, 13) qui sont aussi bien tournées vers la plaquette de frein que tournées dans le sens opposé et qui sont destinées à l'appui de la plaquette de frein dans le frein à disque et coopèrent avec ce dernier d'une façon telle, qu'au moins dans le cas de forces importantes d'application du frein, la force circonférentielle s'exerçant sur la plaquette de frein soit transmise au frein à disque par l'intermédiaire des deux parties latérales (3, 4), caractérisée en ce que la partie latérale (3, 4) servant à l'appui de la plaquette de frein est décalée dans son ensemble par rapport à la partie restante de la plaque de support (5) dans la direction s'éloignant de la surface de friction, en lui restant parallèle.

2. Plaquette de frein suivant la revendication 1, caractérisée en ce que les parties latérales décalées sont constituées par deux talons sensiblement en forme de crochet, notamment en forme de tête de marteau.
